# EUROPEAN PATENT SPECIFICATION

(11) **EP 0 507 335 B1**
(45) Date of publication and mention of the grant of the patent: **10.01.1996**
(21) Application number: 92105804.6
(22) Date of filing: 03.04.1992
(51) Int. Cl.: G01N 19/04

(54) **Tool for measuring the adhesion of plastic-material layers deposited on small-diameter cylindrical objects**
Gerät zum Messen der Haftfestigkeit von Kunststoffschichten, die auf zylindrischen Körpern mit kleinem Durchmesser aufgebracht werden
Instrument de mesure de l'adhésion de couches plastiques déposées sur des objets cylindriques de faible diamètre

(30) Priority: 04.04.1991 IT UM910074 U
(43) Date of publication of application: 07.10.1992
(73) Proprietor: SIP SOCIETA ITALIANA PER l'ESERCIZIO DELLE TELECOMUNICAZIONI P.A., I-10122 Torino (IT)
(72) Inventor: Cocito, Giuseppe, S. Giusto Can.se, Torino (IT)
(74) Representative: Riederer Freiherr von Paar zu Schönau, Anton

(56) References cited:
- FR-A- 927 053
- FR-A- 2 622 746
- GB-A- 2 104 225
- GB-A- 2 204 454
- US-A- 2 929 285
- PROCEEDINGS OF THE 36TH INTERNATIONAL WIRE & CABLE SYMPOSIUM (ARLINGTON, VA) 1987, FORT MONMOUTH, NJ, US pages 163 - 168; J. A. MOSES ET AL.: 'A test for optical fiber coating strippability'

## Description

### Tool for Measuring the Adhesion of Plastic-Material Layers Deposited on small-Diametter Cylindrical Objects

The present invention concerns instruments for measuring mechanical properties of materials and more particularly it relates to a tool for measuring the adhesion of plastic-material layers deposited on small-diameter cylindrical objects, such as small bars, wires, fibres and the like. Such objects are widely used. They are coated with one or more layers of plastic material, e.g. varnishes, lacquers and the like, for aesthetic, protective, or other technical reasons. It would be useful to measure the adhesion strength of said coating layers on the cylindrical object, in order to evaluate the efficiency of the protective action exerted by the layers and their resistance to stresses. Presently, methods for measuring the adhesion of coating layers deposited on plane or nearly-plane surfaces are known and are objects of various standards. One can see for instance, what suggested for the adhesion measurement of a specific polymeric product to glass on page 16 of the data-sheet "Test Methods", Issued 1/89 by De Soto Inc.(1700 South Mt. Prospect Road,Des Plaines,lllinois 60018,U.S.A). The method described here allows the adhesion between the polymeric material and a plane glass surface to be measured. Other methods are described in the papers ASTM (1916 Race Str., Philadelphia, Pa 19103, U.S.A) D3359 "Method for measuring Adhesion by Tape Test" and D2197 "Test Method for adhesion of Organic Coatings".

On the contrary, for cylindrical objects with diameter less than 1 millimetre, no methods are known allowing easy, precise and repeatable measurementsof the said adhesion strength.

This requirement is nowadays particularly felt in the field of optical fibres. As known, telecommunications optical fibres are long wires of circular section with a diameter of 125 µm, made of silica glass. They are offered on the market after being coated with one or two layers of plastic material with the aim of protecting their surfaces from mechanical type injuries. Namely, injuries due to atmospheric dust, causing a lot of microcracks on the glass surface, which afterwards advance towards the inside till the fibre is broken when submitted to a mechanical stress.

Unluckily the presence of protective layers causes a certain degree of decay in the optical and transmission characteristics of the optical fibres, whose nature also depends on the type of plastic material used for coating.

E.g. optical attenuation due to microbendings increases as a consequence of alterations in the coating adhesion of the layer in presence of water and/or with temperature changes.

In the field of optical fibres for telecommunications a method is known (Proceedings of the 36th International Wire & Cable Symposium (Arlington VA) 1987, Fort Monmouth NJ, US, pages 163-168, J. Moses et al.), allowing evaluation, even though very rough, of the adhesion of coating layers to glass fibre surface. According to this method, an optical fibre is held at one end by a pair of jaws, while at the other end it is closed in a blade stripper cutting all the coating layers, but not the fibre. This is obtained thanks to two correspondent semicircular cavities, which give origin to a hole with a diameter which is slightly greater than that of the fibre, i.e. 125 µm when the jaws are fully closed. The fibre is then drawn at a predetermined constant speed by a recording dynamometer. The force necessary to strip coating layers, still keeping the speed constant, is recorded as a time function, and therefore as a function of stripper path.

In the recorded trace an initial peak is always observed, due to formation of corrugations in the coating before detachment. The currungations always disappear later on, even if they tend to form again from time to time giving origin to anomalous peaks.

The mean value of the recorded strength in the most constant segments of the trace is generally taken as adhesion value. It is also possible to make reference to minimum values appearing on the trace, or to make reference to maxima. Apart from these differences which could be overcome with the introduction of proper standards, the method does not offer repeatable values. In fact, beside being affected by ambient humidity and temperature, it gives different results in function of tool kind and blade wear and the response fluctuations highly affect mean value measurement, even though the conditions remain the same.

Said drawbacks are overcome by the tool for measuring the adhesion of plastic-material layers deposited on small-diameter cylindrical objects, provided by the present invention, which allows the adhesion strength to be measured with optimum repeatability and without great fluctuations in the trace supplied by the recording dynamometer.

The present invention provides a tool for measuring the adhesion of plastic-material layers deposited on cylindrical objects, having means for determining the force necessary to strip the coating layers and provided with blades having an aperture with a diameter slightly greater than the diameter of the cylindrical object, characterized in that each of the blades has the shape which is obtained by cutting by an axial plane the solid comprised between two coaxial frustums intersecting each other so as to have a common small base. To make it clear reference is made to the annexed drawing in which:
- Fig.1 is a sectional view of the tool;
- Fig.2 is a view of the joining zone of the tool blades;
- Fig.3 is a view of the the joining zone of the blades in a second version of the tool;
- Fig. 4 is a view of the joining zone of the blades of a third version of the tool.

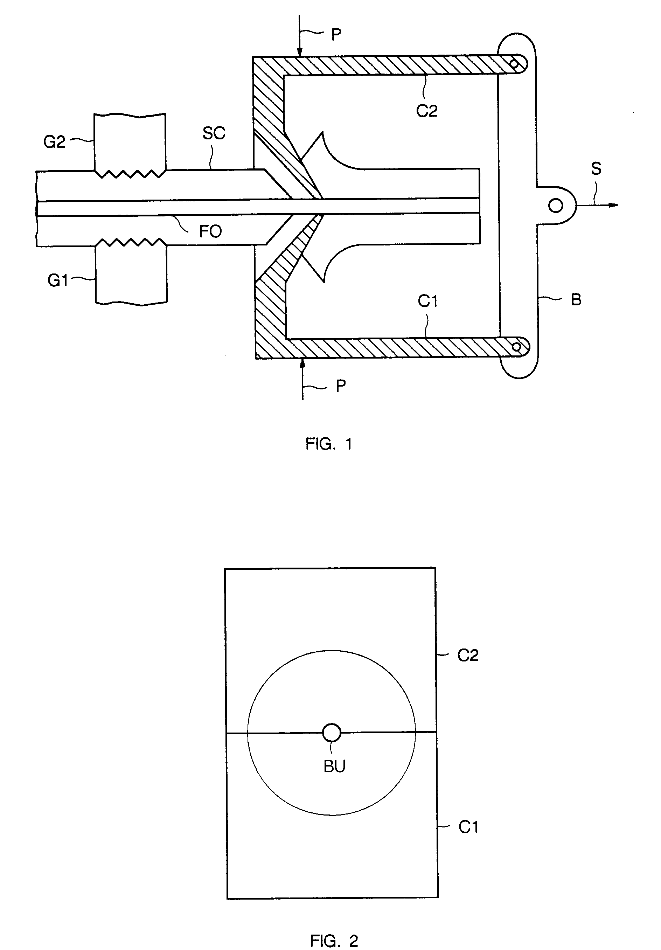

Fig.1 shows an optical fibre FO, covered with coating layers SC, which is held at one end by a pair of jaws G1 and G2, while at the other it is inserted in a tool with blades C1 and C2, closed together by a suitable strength P and joined by an element B.

The blades cut all the coating layers SC, but not fibre FO owing to their shape, which gives rise to a hole of diameter slightly greater than 125 µm, when they are fully closed. According to the known methods, the tool is then drawn with force S, at a constant predetermined speed, with a recording dynamometer. The force necessary to strip the coating layers, still keeping the speed constant, is recorded in function of time, and therefore in function of the tool path, thus obtaining a trace.

Fig.2 shows the portion of the tool wherein the blades C1 and C2 come to contact, leaving in the axial part a circular hole BU with a diameter slightly greater than that of the fibre.

The difference between the tool provided by the invention and the known ones relies in the shape of blades C1 and C2, which are not plane. When they are fully closed, they take up the shape of the solid comprised between two coaxial frustums intersecting each other in correspondence with their small bases, which present a diameter slightly greater than the fibre diameter deprived of the coating layers. Each blade is obtained by section of the solid above by an axial plane, if the tool is formed by only two blades, or by means of two or three axial planes if the blade number is higher, e.g. three or four. Conic shape helps detach the coating layers from the cylindrical fibre, without causing more or less pronounced ripples which are the main cause of trace fluctuations and scanty measurement repeatability.

The tool fully closes only after a certain translation, even with a null or nearly null closure strength P. The trace which represents intensity S of traction force, applied to translate the tool at constant speed, presents an initial transient with progressively increasing slope, followed by a segment which can be horizontal or slightly fluctuating around a mean value, which can be taken as the measure of fibre coating-layer adhesion.

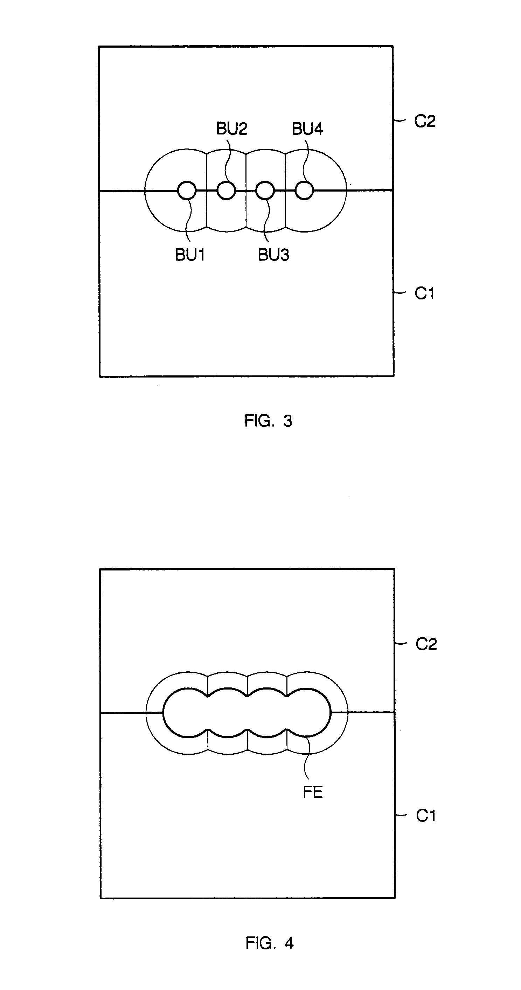

Fig.3 shows a second version of the tool, apt to adhesion measurement of the first coating layer of optical fibres placed in a ribbon-like cable.

In this case the four fibres present are simultaneously deprived of all the coating layers and the measure obtained expresses the total of the individual adhesion values. The blade shape is of course still that obtained by cutting by an axial plane a plurality of solids comprised between two coaxial frustums intersecting each other in correspondence with their small bases BU1, BU2, BU3, BU4 and placed side by side with parallel axes lying on said plane.

Fig.4 shows a third version of the tool for measuring the adhesion of the second coating layer surrounding the four fibres of a ribbon-like cable, individually coated with the first layer. The blade shape is equal to that of the already examined blades, with the only difference that the holes resulting in closure position have larger diameter and superpose, giving rise to a single slot FE.

## Claims

1. Tool for measuring the adhesion of plastic-material layers deposited on small diameter cylindrical objects, such as small bars, wires or fibres, having means for determining the force necessary to strip the coating layers and provided with blades (C1,C2) having an aperture with a diameter slightly greater than the diameter of the cylindrical object, characterized in that each of the blades has the shape which is obtained by cutting by an axial plane the solid comprised between two coaxial frustums intersecting each other so as to have a common small base (BU).

2. Tool as claimed in claim 1, characterized in that each of said blades (C1,C2) has the shape which is obtained by cutting said solid by two or more axial planes.

3. Tool for measuring the adhesion of plastic-material layers deposited on small diameter cylindrical objects, such as small bars, wires or fibres, having means for determining the force necessary to strip the coating layers and provided with blades (C1, C2) having an aperture with a diameter slightly greater than the diameter of the cylindrical object, characterized in that each of the blades has the shape which is obtained by cutting by an axial plane a plurality of solids, each comprised between two coaxial frustums intersecting each other so as to have common small bases (BU1, BU2, BU3, BU4) and placed side by side with the axes parallel and lying on said plane.

4. Tool as claimed in claim 3, characterized in that said small bases superpose giving origin to a slot (FE).

## Patentansprüche

1. Gerät zum Messen der Haftfestigkeit von Kunststoffschichten, die auf zylindrischen Körpern mit kleinem Durchmesser wie kleinen Stäben, Drähten oder Fasern aufgebracht sind, mit einer Einrichtung zum Bestimmen der beim Ablösen der Überzugsschichten erforderlichen Kraft und mit Schneidwerkzeugen (C1, C2), die eine Öffnung mit einem geringfügig größerem Durchmesser als dem Durchmesser des zylindrischen Körpers haben, dadurch gekennzeichnet, daß jedes der Schneidwerkzeuge die Form hat, die durch Schneiden des Raumkörpers in einer Axialebene entsteht, der zwischen zwei koaxialen Kegelstümpfen eingeschlossen ist, welche sich so durchdringen, daß sie eine gemeinsame kleine Grundfläche (BU) haben.

2. Gerät nach Anspruch 1, dadurch gekennzeichnet, daß jedes der Schneidwerkzeuge (C1, C2) die durch Schneiden des Raumkörpers in zwei oder mehr Axialebenen erhaltene Form aufweist.

3. Gerät zum Messen der Haftfestigkeit von Kunststoffschichten, die auf zylindrischen Körpern mit kleinem Durchmesser wie kleinen Stäben, Drähten oder Fasern aufgebracht sind, mit einer Einrichtung zum Bestimmen der beim Ablösen der Überzugsschichten erforderlichen Kraft und mit Schneidwerkzeugen (C1, C2), die eine Öffnung mit einem geringfügig größerem Durchmesser als dem Durchmesser des zylindrischen Körpers haben, dadurch gekennzeichnet, daß jedes der Schneidwerkzeuge die Form aufweist, die durch Schneiden einer Mehrzahl von Raumkörpern in einer Axialebene entsteht, die jeweils zwischen zwei koaxialen Kegelstümpfen eingeschlossen sind, welche sich so durchdringen, daß sie gemeinsame kleine Grundflächen (BU1, BU2, BU3, BU4) haben, und die Seite an Seite mit parallelen und in dieser Ebene liegenden Achsen angeordnet sind.

4. Gerät nach Anspruch 3, dadurch gekennzeichnet, daß die kleinen Grundflächen einander unter Entstehung eines Schlitzes (FE) überdecken.

## Revendications

1. Pince pour la mesure de l'adhésion de couches de matière plastique déposées sur des objets cylindriques de petit diamètre, comme des petites barres, fils ou fibres, ayant des moyens pour déterminer la force nécessaire pour arracher les couches de revêtement et fournie de lames (C1, C2) ayant une ouverture avcc un diamètre légèrement plus grand que le diamètre de l'objet cylindrique, caractérisée en ce que chaque lame a la forme qui s'obtient en coupant par un plan axial le solide compris entre deux troncs de cône coaxiaux qui se rencontrent en manière d'avoir une petite base commune (BU).

2. Pince selon la revendication 1, caractérisée en ce que chacune de ces lames (C1, C2) a la forme qui s'obtient en coupant par deux ou plusieurs plans axiaux ce solide.

3. Pince pour la mesure de l'adhésion de couches de matière plastique déposées sur des objets cylindriques de petit diamètre, comme des petites barres, fils ou fibres, ayant des moyens pour déterminer la force nécessaire pour arracher les couches de revêtement et fournie de lames (C1, C2) ayant une ouverture avec un diamètre légèrement plus grand que le diamètre de l'objet cylindrique, caractérisée en ce que chaque lame a la forme qui s'obtient en coupant par un plan axial un pluralité de solides chaque compris entre deux troncs de cône coaxiaux qui se rencontrent en manière d'avoir des petites bases communes (BU1, BU2, BU3, BU4) et placés côté à côté avec leurs axes parallèles et appartenant audit plan.

4. Pince selon la revendication 3, caractérisée en ce que lesdites petites bases se superposent en créant une fente (FE).
